# EUROPÄISCHE PATENTSCHRIFT

(11) **EP 1 912 799 B1**
(45) Veröffentlichungstag und Bekanntmachung des Hinweises auf die Patenterteilung: **07.04.2010**
(21) Anmeldenummer: 06775827.6
(22) Anmeldetag: 08.08.2006
(51) Int. Cl.: B60B 19/12

(54) **RAD**
WHEEL
ROUE

(30) Priorität: 09.08.2005 DE 202005012682 U
(43) Veröffentlichungstag der Anmeldung: 23.04.2008
(73) Patentinhaber: KUKA Roboter GmbH, 86165 Augsburg (DE)
(72) Erfinder: GÜNTHER, Wolfgang, 38239 Salzgitter (DE)
(74) Vertreter: Stornebel, Kai
(86) Internationale Anmeldenummer: PCT/DE2006/001390
(87) Internationale Veröffentlichungsnummer: WO 2007/016917

(56) Entgegenhaltungen:
- EP-A2- 0 147 602
- WO-A-86/03132
- DE-A1- 2 354 404
- DE-A1- 3 841 971
- US-B1- 6 179 073

## Beschreibung

Die vorliegende Erfindung betrifft ein Rad mit einem angetriebenen Radkörper, der zwei Tragelemente aufweist, zwischen denen eine Vielzahl von Rollkörpern mit einer balligen Oberfläche drehbar angeordnet sind, die zumindest teilweise über den Umfang der Tragelemente hinausragen und deren Drehachsen schräg zu der Drehachse des Radkörpers ausgerichtet sind. Ein solches Rad ist insbesondere bei Schwerlastrangierfahrzeugen vorteilhaft einzusetzen.

Aus der gattungsgemäßen DE 38 41 971 C2 ist ein allseitig rangierbares, gleisloses Flurfördergerät bekannt, das Fahrschemel aufweist, an dem eine Lenkrolle und ein angetriebenes Rad angeordnet sind. Die angetriebenen Räder weisen Rollkörper auf, deren Oberfläche ballig oder tonnenförmig ausgebildet ist und deren Rollkörperachsen schräg zu der jeweiligen Achse des angetriebenen Rades verlaufen. Solche angetriebenen Räder sind unter dem Begriff "Mecanum-Räder" bekannt.

Die aus dem Stand der Technik bekannten Mecanum-Räder haben den Nachteil eines unruhigen Laufes, insbesondere wenn Rollkörper auf Radkörpern unterschiedlicher Durchmesser montiert werden.

Ausgehend von diesem Stand der Technik liegt der Erfindung die Aufgabe zugrunde, ein gattungsgemäßes Rad bezüglich der Laufeigenschaften zu verbessern.

Erfindungsgemäß wird diese Aufgabe durch ein Rad mit den Merkmalen des Anspruchs 1 gelöst. Vorteilhafte Ausgestaltungen und Weiterbildungen der Erfindung sind in den Unteransprüchen beschrieben. Das erfindungsgemäße Rad mit einem angetriebenen Radkörper, der zwei Tragelemente aufweist, zwischen denen eine Vielzahl von Rollkörpern mit einer balligen Oberfläche drehbar angeordnet sind, die zumindest teilweise über den Umfang der Tragelemente hinausragen und deren Drehachsen schräg zu der Drehachse des Radkörpers ausgerichtet sind, sieht vor, dass das Verhältnis des Außendurchmessers des Rades zu dem maximalen Radius der Rollkörper zwischen 1,08 und 1,13, insbesondere zwischen 1,09 und 1,12 beträgt. Überraschend wurde gefunden, dass bei einem solchen Verhältnis des theoretischen Aussendruchmessers des Rades, also des Durchmessers des unbelasteten Rades, zu dem maximalen Radius der Rollkörper die Räder unabhängig von den Radgrößen einen sehr gleichmäßigen Lauf mit einer hohen Laufruhe und hohen Laufgenauigkeit haben. Dadurch ist es möglich, hochpräzise Positionieraufgaben auch bei sehr schweren Lasten durchzuführen. Ein sehr gutes Rollverhalten wurde bei einem Verhältnis zwischen 1,10 und 1,11, insbesondere bei 1,107 gefunden.

Eine Weiterbildung der Erfindung sieht vor, dass der Rollkörper einen balligen Tragkörper und eine auf dem Außenumfang des Tragkörpers angebrachte Kunststoffbeschichtung, insbesondere aus einem Polyurethan-Elastomer, von im Wesentlichen konstanter Dicke umfasst. Der Polyurethan-Elastomer ist beispielsweise aus Vulkollan^{®} ausgebildet. Durch die ballige-Ausgestaltung des Tragkörpers und eine gleichmäßig auf dem Außenumfang des Tragkörpers aufgebrachte Kunststoffbeschichtung wird eine gleichmäßige Belastung und Deformation der Kunststoffschicht über den gesamten Rollkörperradius gewährleistet. Während bei herkömmlichen Rollkörpern, deren Balligkeit durch die Kunststoffbeschichtung erzeugt wird, im Bereich der höchsten Materialstärke der Kunststoffbeschichtung eine andere Deformation als im Randbereich vorliegt, was zu einem ungleichmäßigen Trag- und Abrollverhalten führt, bleibt bei dem erfindungsgemäßen Rollkörper über den gesamten Rollradius des Rollkörpers die Deformation und damit die Auflagefläche unverändert.

Eine gleichmäßige Krümmung des Tragkörpers und damit auch der Oberfläche des Rollkörpers fördert den gleichmäßigen Lauf.

Die Drehachsen der Rollkörper sind bevorzugt in einem Winkel von 45 zur Drehachse des Radkörpers angeordnet, so dass ein nahezu übergangsloser Wechsel von einem Rollkörper auf den anderen bei fortschreitender Abrollbewegung erfolgen kann. Überraschend hat sich herausgestellt, dass bei einer Anordnung von neun Rollkörpern an dem Radkörper eine besonders gleichmäßige Kraft- und Lastverteilung bei dem bevorzugten Verhältnis des Außendurchmessers des Rades zu dem maximalen Rollenradius vorliegt. Die neun Rollkörper sind dabei gleichmäßig zueinander beabstandet an dem Radkörper angeordnet.

Nachfolgend wird ein Ausführungsbeispiel der Erfindung anhand der beigefügten Figuren näher erläutert. Es zeigen:
Figur 1 - ein erfindungsgemäßes Rad in Frontalansicht;
Figur 2- eine Seitenansicht der Figur 1; sowie
Figur 3 - eine Einzeldarstellung eines Rollkörpers in Schnittdarstellung.

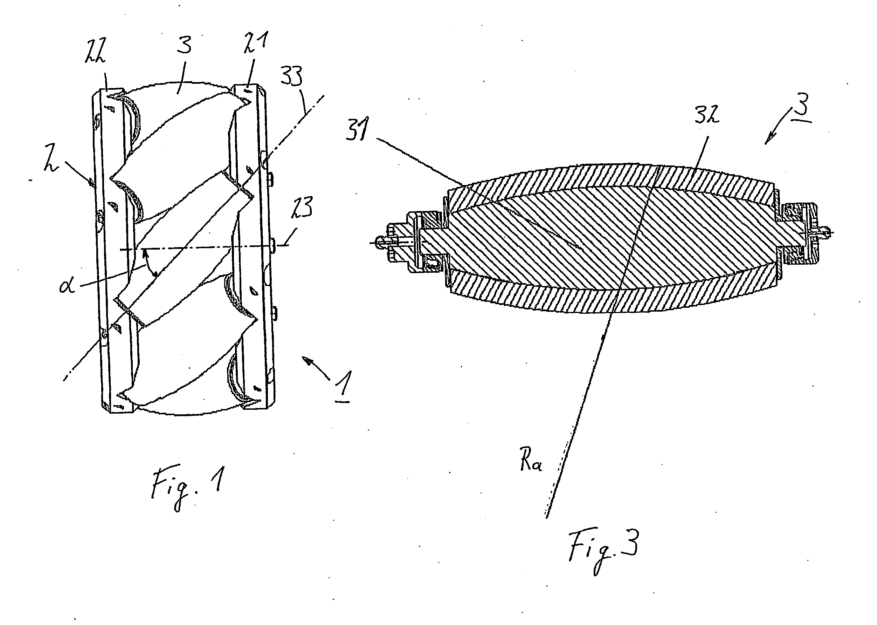

In der Figur 1 ist in Frontalansicht ein Rad 1 mit einem Radkörper 2 gezeigt, der zwei Tragelemente 21, 22 aufweist, die als voneinander beabstandete Radscheiben ausgebildet sind. Die Tragelemente 21, 22 können durch einen nicht dargestellten Antrieb bewegt werden und sind starr miteinander verbunden. Der Radkörper 2 ist um seine Drehachse 23 in beide Richtungen drehbar gelagert.

Zwischen den starr miteinander verbundenen Tragelementen 21, 22 sind Rollkörper 3 gleichmäßig voneinander beabstandet angeordnet. Die Rollkörper 3 haben eine ballige Außenkontur und stehen mit ihren Drehachsen 33 in einem Winkel α von bevorzugt 45 ° zu der Drehachse 23 des Radkörpers 2. Die Rollkörper 3 sind frei drehbar zwischen den Tragelementen 21, 22 gelagert und ragen mit ihrer Außenkontur geringfügig über den Außenumfang der Tragelemente 21, 22 hinaus und bilden somit die Auflagefläche und Abrollfläche des Rades 1 auf dem nicht dargestellten Untergrund.

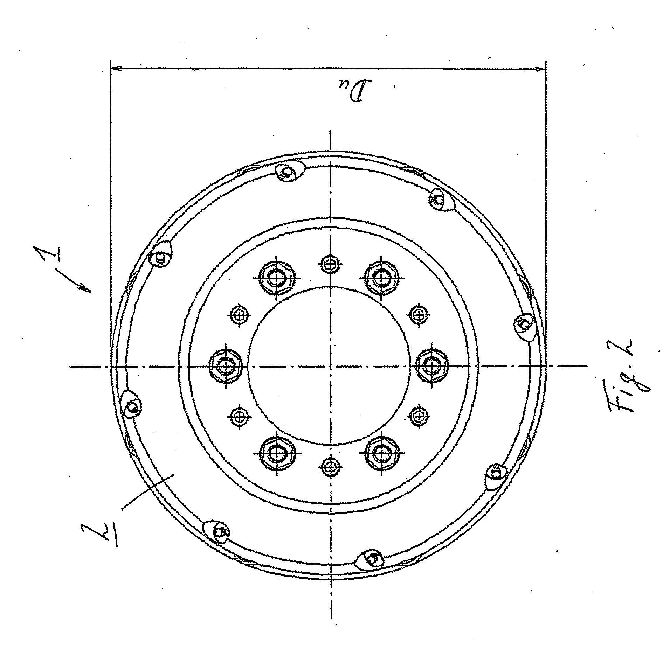

In der in der Figur 2 dargestellten Ausführungsform sind insgesamt acht Rollkörper 3 gleichmäßig zueinander beabstandet in dem Rad 1 vorgesehen; eine bevorzugte Ausführungsform der Erfindung sieht vor, dass neun Rollkörper 3 gleichmäßig zueinander beabstandet, frei drehbar zwischen den Tragelementen 21, 22 befestigt sind. Der Außendurchmesser D_{U}, also derjenige Durchmesser, auf dem das Rad 1 umläuft, und der maximale Rollenradius Rₐ, stehen bevorzugt in einem Verhältnis von 1,107 zueinander, wodurch unabhängig von dem Außendurchmesser D_{U} ein optimales Rollverhalten des Rades 1 gewährleistet ist.

Die Figur 3 zeigt einen Rollkörper 3 in Querschnittsansicht, aus der zu entnehmen ist, dass der Rollkörper 3 aus einem elliptischen Tragkörper 31, bevorzugt aus einem Gussmaterial wie Ferroguss, und einer Kunststoffbeschichtung 32 auf der Außenseite des balligen Tragkörpers 31 besteht. Die Kunststoffbeschichtung 32 weist eine konstante Dicke auf und ist bevorzugt aus einem hoch belastbaren Polyurethan-Elastomer gefertigt. Der maximale Rollenradius Rₐ legt auch die konstante Krümmung sowohl des Tragkörpers 31 als auch der Kunststoffbeschichtung 32 fest.

## Patentansprüche

1. Rad mit einem angetriebenen Radkörper, der zwei Tragelemente aufweist, zwischen denen eine Vielzahl von Rollkörpern mit einer balligen Oberfläche drehbar angeordnet sind, die zumindest teilweise über den Umfang der Tragelemente hinausragen und deren Drehachsen schräg zu der Drehachse des Radkörpers ausgerichtet sind, **dadurch gekennzeichnet, dass** das Verhältnis des Außendurchmessers (D_{U}) des Rades (1) zu dem maximalen Radius (Ra) der Rollkörper (3) zwischen 1, 08 und 1,13, insbesondere zwischen 1, 09 und 1,12 beträgt.

2. Rad nach Anspruch 1, **dadurch gekennzeichnet, dass** das Verhältnis zwischen 1,10 und 1,11, insbesondere 1,107 beträgt.

3. Rad nach Anspruch 1 oder 2, **dadurch gekennzeichnet, dass** der Rollkörper (3) einen balligen Tragkörper (31) und eine auf dem Außenumfang des Tragkörpers (31) angebrachte Kunststoffbeschichtung (32), insbesondere aus einem Polyurethan-Elastomer, von im Wesentlichen konstanter Dicke umfasst.

4. Rad nach Anspruch 3, **dadurch gekennzeichnet, dass** der Tragkörper (31) eine konstante Krümmung aufweist.

5. Rad nach einem der voranstehenden Ansprüche, **dadurch gekennzeichnet, dass** die Drehachsen (33) der Rollkörper (3) in einem Winkel von 45° zur Drehachse (23) des Radkörpers (2) angeordnet sind.

6. Rad nach einem der voranstehenden Ansprüche, **dadurch gekennzeichnet, dass** neun Rollkörper (3) gleichmäßig zueinander beabstandet an dem Radkörper (2) angeordnet sind.

7. Rad nach einem der voranstehenden Ansprüche, **dadurch gekennzeichnet, dass** die Rollkörper (3) angetrieben sind.

## Claims

1. Wheel having a driven wheel body, which comprises two carrier elements, rotatably arranged between which is a plurality of rolling elements having a spherically crowned surface, which project at least partially beyond the circumference of the carrier elements and the axes of rotation of which are oriented at an angle to the axis of rotation of the wheel body, **characterized in that** the ratio of the outside diameter (D_{U}) of the wheel (1) to the maximum radius (Ra) of the rolling elements (3) is between 1.08 and 1.13, in particular between 1.09 and 1.12.

2. Wheel according to Claim 1, **characterized in that** the ratio is between 1.10 and 1.11, in particular at 1.107.

3. Wheel according to Claim 1 or 2, **characterized in that** the rolling element (3) comprises a spherically crowned carrier member (31) and a plastic coating (32), particularly one of a polyurethane elastomer of substantially constant thickness, applied to the outer circumference of the carrier member (31).

4. Wheel according to Claim 3, **characterized in that** the carrier member (31) has a constant curvature.

5. Wheel according to one of the preceding claims, **characterized in that** the axes of rotation (33) of the rolling elements (3) are arranged at an angle of 45° to the axis of rotation (23) of the wheel body (2).

6. Wheel according to one of the preceding claims, **characterized in that** nine rolling elements (3) are arranged at uniform intervals from one another on the wheel body (2).

7. Wheel according to one of the preceding claims, **characterized in that** the rolling elements (3) are driven.

## Revendications

1. Roue comprenant un corps de roue entraîné qui présente deux éléments porteurs entre lesquels sont agencés rotatifs plusieurs corps de roulement ayant une surface bombée, qui dépassent au moins partiellement le pourtour des éléments porteurs et dont les axes de rotation sont orientés en biais par rapport à l'axe de rotation du corps de roue, **caractérisée en ce que** le rapport du diamètre extérieur (D_{U}) de la roue (1) par rapport au rayon (Rₐ) maximum des corps de roulement (3) vaut entre 1,08 et 1,13, en particulier entre 1,09 et 1,12.

2. Roue selon la revendication 1, **caractérisée en ce que** le rapport vaut entre 1,10 et 1,11, en particulier 1,107.

3. Roue selon la revendication 1 ou 2, **caractérisée en ce que** le corps de roulement (3) comprend un corps porteur (31) bombé et un revêtement en matière synthétique (32) rapporté sur le pourtour extérieur du corps porteur (31), en particulier en un élastomère polyuréthane, d'épaisseur sensiblement constante.

4. Roue selon la revendication 3, **caractérisée en ce que** le corps porteur (31) présente une courbure constante.

5. Roue selon l'une des revendications précédentes, **caractérisée en ce que** les axes de rotation (33) des corps de roulement (3) sont agencés à un angle de 45° par rapport à l'axe de rotation (23) du corps de roue (2).

6. Roue selon l'une des revendications précédentes, **caractérisé en ce que** neuf corps de roulement (3) sont agencés sur le corps de roue (2) régulièrement espacés les uns des autres.

7. Roue selon l'une des revendications précédentes, **caractérisée en ce que** les corps de roulement (3) sont entraînés.
